# EUROPEAN PATENT APPLICATION

(11) **EP 2 277 744 A1**
(43) Date of publication of application: **26.01.2011**
(21) Application number: 10169477.6
(22) Date of filing: 14.07.2010
(51) Int. Cl.: B60R 19/16

(54) **Shock-absorbing device, particularly for heavy vehicles**

(30) Priority: 15.07.2009 IT TO20090527
(71) Applicant: Ac ROLCAR S.r.l., 10099 San Mauro Torinese (TO) (IT)
(72) Inventor: Castiglioni, Manuela, 28876 Macugnaga (IT)
(74) Representative: Rondano, Davide

(57) **Abstract**

The shock-absorbing device (10) comprises: a spherical cushioning bumper (12) consisting of a spherical core of metal material covered with elastomeric material intended to absorb the shocks of a vehicle, in particular of a heavy vehicle, against an obstacle, in particular against a loading/unloading platform; a casing (14) of parallelepiped shape intended to be attached to a surface of the vehicle or of the obstacle, the bumper (12) being received in the casing (14) so as to partially project outwards from it; and at least one support body (16) received in the casing (14) to support the bumper (12), whereby the bumper (12) is freely rotatable about its own centre (C). The at least one support body (16) is rotatably mounted in the casing (14) and is of cylindrical or spherical shape.

## Description

The present invention refers to a shock-absorbing device intended to absorb the shocks of a vehicle, in particular a heavy vehicle, against a stationary obstacle, in particular a loading/unloading platform, as specified in the preamble of independent claim 1.

European Patent EP 0 648 644 discloses a shock-absorbing device comprising a cylindrical bumper of cushioning material rotatably supported on a support casing attached to a loading/unloading platform or to the rear part of a lorry so as to be able to rotate about a horizontal axis of rotation. Such a known shock-absorbing device has the advantage, with respect to shock-absorbing devices provided with stationary bumper, to avoid tear stresses on the bumper in case of relative movements - directed perpendicularly to the axis of rotation of the bumper - between the bumper and the obstacle against which the bumper impinges. However, such a known device is not able to avoid the generation of tear stresses on the bumper in case of relative movements between bumper and obstacle having a component directed parallel to the axis of rotation of the bumper.

A shock-absorbing device according to the preamble of independent claim 1 is known from FR2804644. In the shock-absorbing device known from this document, the cushioning bumper is of spherical shape and is supported by the support body so as to be able to rotate about its own centre. The support body comprises a shell forming a spherical seat in which the bumper is received, instead of an elastic core on which the shell is mounted. Apart from small displacements due to the elastic deformation of the elastic core, the support body is stationary relative to the seat. Accordingly, in case of the bumper rolling on the surface of an obstacle, the spherical surface of the bumper (which rotates about its own centre) slides on the spherical surface of the seat (which is stationary), which may lead over time to wear of the spherical surfaces of the bumper and of the seat.

It is therefore an object of the present invention to provide a shock-absorbing device of the above-specified type, which is not affected by the drawbacks of the prior art discussed above.

This and other objects are fully achieved according to the present invention by virtue of a shock-absorbing device having the characteristics defined in the characterizing part of independent claim 1.

In short, the invention is based on the idea of providing a shock-absorbing device comprising a casing intended to be attached to the vehicle (typically to the rear part thereof) or to the obstacle, a spherical cushioning bumper received in the casing so as to project partially outwards from it, and at least one support body received in the casing to support the bumper, whereby the bumper is able to rotate freely about its own centre, said at least one support body being rotatably mounted in the casing.

By virtue of the bumper being of spherical shape and being supported by the at least one support body so as to be freely rotatable about its own centre, in case of contact and simultaneous relative movement between bumper and obstacle, the bumper does not tend to slide but to roll on the surface of the obstacle, irrespective of the direction of the relative movement between bumper and obstacle. Clearly, since sliding between bumper and obstacle is avoided, the generation of tear stresses is avoided and therefore the efficiency of the shock-absorbing device is improved and the life thereof is increased. Moreover, by virtue of the at least one support body being rotatably mounted in the casing, in case of rolling of the bumper on the surface of an obstacle, the bumper rolls, instead of sliding, also on the outer surface of the at least one support body against which it is in contact, which results in a reduction in the wear of the contact surfaces of the bumper and of the at least one support body.

Further advantageous characteristics of the invention are specified in the dependent claims, the content of which is to be intended as integral and integrating part of the present description.

For instance, the cushioning bumper preferably consists of a metal spherical core covered with cushioning material (for instance with elastomeric material).

The at least one support body may be made as a cylindrical body which is rotatably mounted in the casing about its own axis and has a lateral surface which is at least partially concave. Alternatively, the at least one support body may be made as a spherical body, preferably having a smaller diameter than that of the cushioning bumper.

The casing is preferably made as a parallelepiped casing and comprises a first flat wall having a circular opening through which the cushioning bumper projects partially outwards.

The casing preferably consists of a sheet metal element integrally forming the aforesaid first flat wall and a pair of lateral flat walls extending parallel to each other and perpendicularly to the first wall from opposite edges thereof, as well as a pair of L-shaped brackets which enclose the casing laterally, along with the pair of lateral flat walls, and which have through holes for insertion of screw fixing members for attaching the casing to the obstacle or to the vehicle.

The invention will be described now in detail on the base of a preferred embodiment given purely by way of non-limiting example with reference to the appended drawings, in which:
Figure 1 is a side elevation view of a shock-absorbing device, particularly for heavy vehicles, according to a preferred embodiment of the present invention;
Figure 2 is a front elevation view, partially in phantom, of the shock-absorbing device of Figure 1;
Figure 3 is a view from above, partially in phantom, of the shock-absorbing device of Figure 1; and
Figure 4 is a perspective exploded view of the shock-absorbing device of Figure 1.

With reference to the drawings, a shock-absorbing device according to a preferred embodiment of the present invention is generally indicated 10 and basically comprises a cushioning bumper 12 of spherical shape, a casing 14 intended to be attached to a part of a heavy vehicle (typically to the rear part) or to an obstacle (typically a loading/unloading platform), and at least one support body 16 (in the illustrated example a pair of support bodies) supporting the bumper 12.

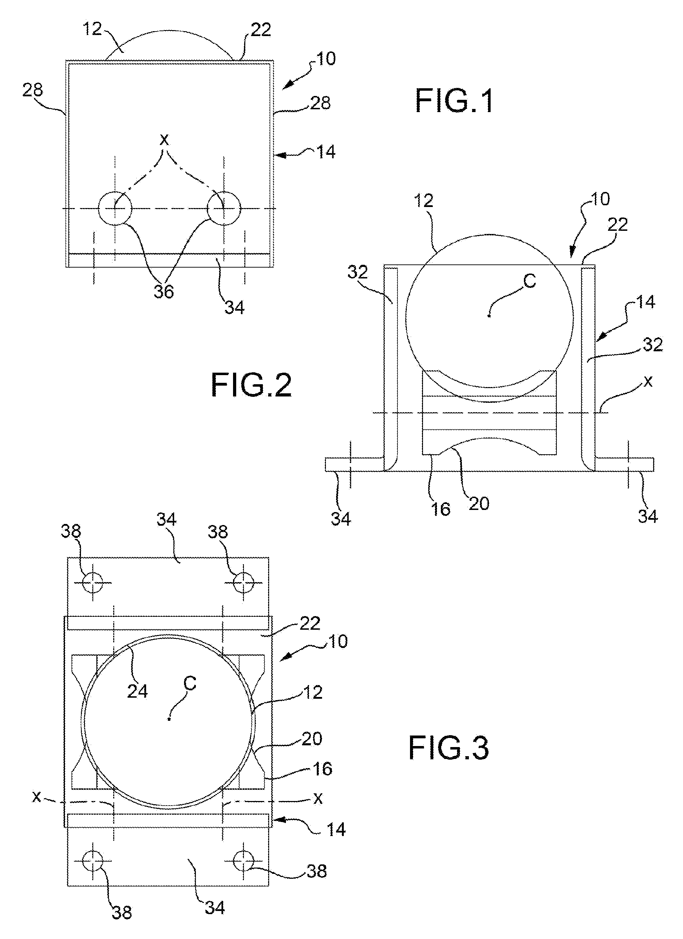

The bumper 12 preferably consists of a metal spherical core covered with cushioning material (for instance elastomeric material). Alternatively, the bumper 12 might be made fully of cushioning material. The bumper 12 is received in the casing 14 so as to project partially outwards (upwards, relative to the point of view of a person observing Figures 1 and 2) from it and is supported by the support bodies 16 so as to be able to rotate freely about its own centre (indicated C in Figures 2 and 3).

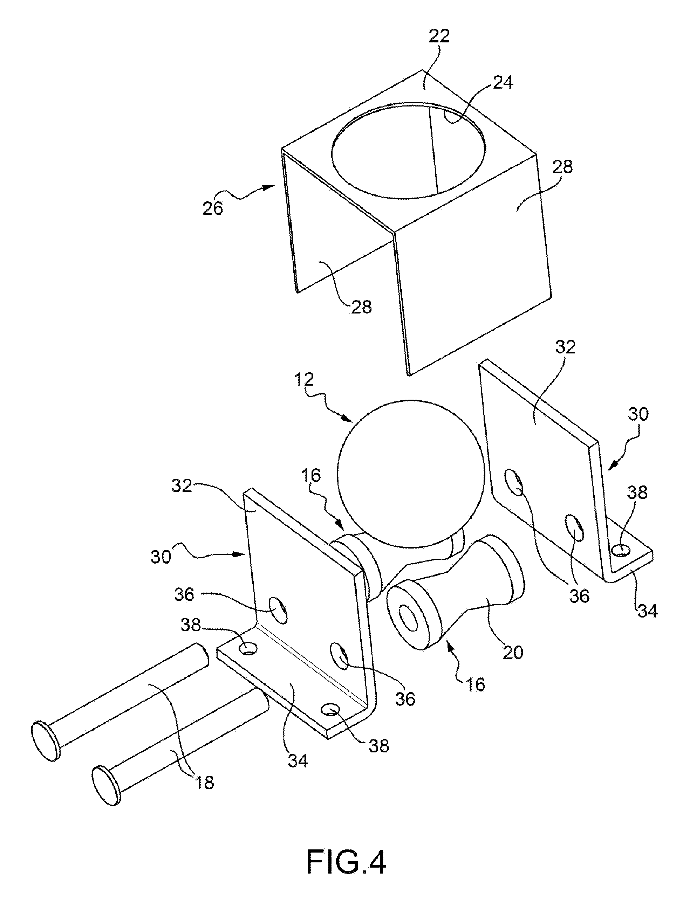

In the embodiment illustrated in the drawings, the support bodies 16 are made as cylindrical bodies rotatably mounted in the casing 14 on respective pins 18 (which can only be seen in the exploded view of Figure 4), the axes of rotation of which (indicated X in Figures 1 to 3) are arranged parallel to each other and lie in a plane parallel to the plane of the surface on which the casing 14 of the shock-absorbing device is intended to be attached. Preferably, the lateral surface of the support bodies 16 is at least partially concave, the concave portion of each support body 16 being indicated 20 in the drawings. The configuration of the concave portions 20 of the support bodies 16 and the distance between the axes of rotation X of the support bodies 16 are chosen in such a manner that the bumper 12 rests on the concave portions 20 of the two support bodies 16.

According to an alternative embodiment, not shown, the support bodies are made as spherical bodies and are also rotatably mounted in the casing of the shock-absorbing device. In such a case, preferably three spherical bodies are provided, the diameter of which is preferably smaller than that of the bumper, so as to limit the overall size of the shock-absorbing device.

The casing 14 is preferably made as a parallelepiped casing which is open on the side (bottom side, relative to the point of view of a person observing the drawings) intended to rest against the surface of the obstacle or of the vehicle to which the shock-absorbing device is intended to be attached. The casing 14 comprises a flat wall 22 (a horizontal wall, relative to the point of view of a person observing the drawings) having a circular opening 24 through which part of the bumper 12 projects. The flat wall 22 is advantageously formed by a sheet metal element (generally indicated 26 in Figure 4) integrally forming two further lateral flat walls 28 (vertical walls, relative to the point of view of a person observing the drawings), which extend perpendicularly to the flat wall 22 from opposite edges thereof. The casing 14 further comprises a pair of brackets 30 made as L-shaped elements each forming a vertical flat wall 32 and a fixing tab 34 which extends perpendicularly to the vertical flat wall 32 from the bottom edge thereof. The vertical flat walls 32 of the brackets 30 laterally enclose, along with the lateral flat walls 28 of the sheet metal element 26, the casing 14. In case of cylindrical support bodies, as in the illustrated embodiment, the vertical flat walls 32 of the brackets 30 have respective through holes 36 in which the pins 18 are supported. The fixing tabs 34 of the brackets 30 have each a plurality of through holes 38 (two holes in the illustrated example) into which respective screw fixing members (not shown) can be inserted for attaching the casing 14 to the obstacle or to the vehicle.

As already anticipated in the introductory part of the present description, the fact of providing a bumper of spherical shape supported inside a casing so as to be able to rotate freely about its own centre ensures that, in case of contact and simultaneous relative movement between bumper and obstacle, the bumper does not tend to slide but to roll on the surface of the obstacle, irrespective of the direction of the relative movement between bumper and obstacle. The generation of tear stresses is thus avoided, which stresses would inevitably occur in case of sliding between bumper and obstacle, and therefore the efficiency of the absorbing action of the shock-absorbing device is improved and the life of the shock-absorbing device is increased. Moreover, since the at least one support body is rotatably mounted in the casing, in case of rolling of the bumper on the surface of an obstacle, the bumper rolls, instead of sliding, on the outer surface of the at least one support body against which it is in contact, which results in a reduction in the wear of the contact surfaces of the bumper and of the at least one support body.

Naturally, the principle of the invention remaining unchanged, the embodiments and manufacturing details may be widely varied with respect to those described and illustrated purely by way of non-limiting example, without thereby departing from the scope of the invention as defined in the attached claims.

## Claims

1. Shock-absorbing device (10), intended to absorb the shocks of a vehicle, in particular of a heavy vehicle, against a stationary obstacle, in particular a loading/unloading platform, the device comprising a casing (14) arranged to be attached to a surface of the vehicle or of the obstacle, at least one cushioning bumper (12) received in the casing (14) so as to project partially outwards from it, and at least one support body (16) received in the casing (14) to support said at least one bumper (12), wherein said at least one bumper (12) is of spherical shape and is supported by said at least one support body (16) so as to be freely rotatable about its own centre (C),
**characterized in that** said at least one support body (16) is rotatably mounted in the casing (14).

2. Shock-absorbing device according to claim 1, wherein said at least one support body (16) is made as a cylindrical body extending along an axis (X) and is rotatably supported by the casing (14) about said axis (X).

3. Shock-absorbing device according to claim 2, wherein the lateral surface of said at least one support body (16) has at least one concave portion (20) against which the respective bumper (12) rests.

4. Shock-absorbing device according to claim 2 or claim 3, comprising, for each bumper (12), a pair of support bodies (16) having the respective axes (X) arranged parallel to each other.

5. Shock-absorbing device according to claim 1, wherein said at least one support body (16) is made as a spherical body.

6. Shock-absorbing device according to any of the preceding claims, wherein said at least one bumper (12) comprises a spherical core of rigid material covered with cushioning material.

7. Shock-absorbing device according to any of the preceding claims, wherein the casing (14) is of parallelepiped shape and comprises a first flat wall (22) having a circular opening (24) through which part of the bumper (12) projects.

8. Shock-absorbing device according to claim 7, wherein the casing (14) comprises a sheet metal element (26) integrally forming said first flat wall (22), as well as a pair of second flat walls (28) which extend perpendicularly to the first one from opposite edges thereof.

9. Shock-absorbing device according to claim 8, wherein the casing (14) further comprises a pair of brackets (30) each of which integrally forms a third flat wall (32) which, along with the second flat walls (28), laterally encloses the casing (14), as well as a fixing tab (34) which extends perpendicularly to said third flat wall (32) and has a plurality of holes (38) for insertion of screw fixing members.

10. Shock-absorbing device according to claim 9, comprising, for each support body (16), a pin (18) about which the support body (16) is rotatably mounted, each pin (18) being supported in a pair of through holes (34) provided in the third flat walls (32) of the casing (14).
